# EUROPÄISCHE PATENTSCHRIFT

(11) **EP 2 432 332 B1**
(45) Veröffentlichungstag und Bekanntmachung des Hinweises auf die Patenterteilung: **31.12.2014**
(21) Anmeldenummer: 10710796.3
(22) Anmeldetag: 15.03.2010
(51) Int. Cl.: A23L 1/236, A23L 2/60, A23L 1/03

(54) **SUCRALOSEHALTIGE SÜSSSTOFFZUSAMMENSETZUNGEN**
SUCRALOSE-CONTAINING ARTIFICIAL SWEETENER COMPOSITIONS
COMPOSITIONS ÉDULCORANTES RENFERMANT DU SUCRALOSE

(30) Priorität: 18.05.2009 DE 102009021812; 12.06.2009 DE 102009024666
(43) Veröffentlichungstag der Anmeldung: 28.03.2012
(60) Teilanmeldung: 13167730.4
(73) Patentinhaber: Krüger GmbH & Co. KG, 51469 Bergisch-Gladbach (DE)
(72) Erfinder: KRÜGER, Willibert, 51467 Bergisch Gladbach (DE)
(74) Vertreter: Von Rohr Patentanwälte Partnerschaft mbB
(86) Internationale Anmeldenummer: PCT/EP2010/001625
(87) Internationale Veröffentlichungsnummer: WO 2010/133267

(56) Entgegenhaltungen:
- EP-A1- 0 237 403
- WO-A2-2008/036270
- WO-A2-2009/100333
- DE-A1- 4 416 769
- GB-A- 902 369
- JP-A- 2009 091 292
- US-A- 3 903 255
- US-A1- 2008 032 023

## Beschreibung

Die vorliegende Erfindung betrifft das Gebiet der Lebensmitteltechnologie, insbesondere Süßstoffzusammensetzungen bzw. Zusammensetzungen mit reduziertem physiologischem Brennwert (Energiegehalt) zum Süßen von Lebensmitteln.

Insbesondere betrifft die vorliegende Erfindung eine kompaktierte, insbesondere verpresste Zusammensetzung mit reduziertem physiologischem Brennwert (Energiegehalt) zum Süßen von Lebensmitteln sowie ein Verfahren zu ihrer Herstellung.

Schließlich betrifft die vorliegende Erfindung die Verwendung der erfindungsgemäßen Zusammensetzungen.

Gesunde und insbesondere kalorienbewusste Ernährung spielt in der Gesellschaft und in der Gesundheitspolitik eine immer wachsende Bedeutung. Produkte, welche kalorienreduziert sind und als alternatives Süßungsmittel zu klassischem Kristallzucker (d. h. Saccharose) verwendet werden, sind bereits aus dem Stand der Technik bekannt. Dabei kann es sich beispielsweise um sogenannte Streu- oder Tafelsüßen, die in Art von herkömmlichem Kristallzucker zu verwenden sind, um Tabletten bzw. Kompakte oder um wässrige Zusammensetzungen ("Flüssigsüßen") handeln. Die süßenden Komponenten sind dabei meist herkömmliche Süßstoffe, wie z. B. Saccharin, insbesondere Natriumsaccharinat, Acesulfam K, Cyclamat, Aspartam, Thaumatin etc. oder aber gegebenenfalls auch Mischungen verschiedener Süßstoffe, wie z.B. Cyclamat und Saccharin.

Die Süßkraft der einzelnen Süßstoffe variiert dabei in weiten Bereichen: Üblicherweise wird reine Saccharose mit einer Süßkraft von 1 eingestuft, so dass dann Süßstoffe eine Süßkraft insbesondere von 10 bis 3.000 aufweisen, was bedeutet, dass 10 g bis 3.000 g Saccharose dieselbe Süßkraft wie 1 g des jeweiligen Süßstoffes besitzen.

Aufgrund dieser hohen Süßintensität können Süßstoffe für die Endanwendung aber meist nicht als Reinsubstanz angeboten und abgegeben werden. Statt dessen werden sie in den oben beschriebenen Formen - d. h. zum Streuen, als Tabletten oder als Flüssigsüße - angeboten.

Die Herstellung der jeweiligen Angebotsform erfolgt im allgemeinen dergestalt, dass der oder die Süßstoffe mit den weiteren Komponenten vermischt und zu der jeweiligen Darreichungsform verarbeitet werden, d. h. beispielsweise zu Süßstofftabletten, Streusüßen oder Flüssigsüßen.

Die Art und die Anteile der zugesetzten Stoffe variieren auch deshalb, da diese oftmals für besondere Anwendungsmedien oder auf Basis bestimmter ernährungsphysiologischer Besonderheiten entwickelt werden. Beispielsweise können Zusammensetzungen bereitgestellt werden, die frei sind von Milchzucker oder dergleichen.

Üblicherweise werden die einzelnen Rohwaren abgewogen und miteinander vermischt. Bei Süßstoffen, die selbst eine schmierende Eigenschaft haben, wird ebenso vorgegangen.

Im Fall von Sucralose wurde im Rahmen der vorliegenden Erfindung jedoch überraschenderweise gefunden, dass nicht nur die Art und der Anteil der Zutaten einen entscheidenden Einfluss auf die Endproduktqualität haben, sondern auch die Art und Weise wie die einzelnen Komponenten verarbeitet werden, bevor das Enderzeugnis ausgeformt wird. Wie die Anmelderin nämlich unerwarteterweise herausgefunden hat, weichen die physikalisch-chemischen Eigenschaften von Sucralose gegenüber anderen handelsüblichen Süßstoffen ab: Sucralose neigt beim weiteren Verarbeiten zum Kleben; dies führt beispielsweise beim Pressen (z. B. bei der Herstellung von Süßstofftabletten) dazu, dass entweder keine akzeptablen Tabletten entstehen oder aber sich die Maschinenleistung deutlich verringert und es somit zu keinen wirtschaftlichen Ausbeuten kommt. Die wirtschaftlichen Parameter sind für die qualitativen Aspekte des Endproduktes zweitrangig. Parameter, wie Tablettengewicht, Aussehen und Konsistenz, sind für den Endverbraucher wichtige Kriterien, die eine sichere und gleichbleibende Anwendbarkeit garantieren.

Zwar existieren schon kalorienreduzierte Produkte auf Sucralosebasis im Markt, jedoch führen hierbei die eingesetzten Zuschlagstoffe, welche zugegeben werden, um die Herstellung zu verbessern, zu unerwünschten sensorischen Veränderungen, die unter bestimmten Umständen auftreten können, insbesondere in Abhängigkeit von den Einflussfaktoren Temperatur und Zeit.

Die WO 2008/036270 A2 betrifft kohäsive nichtfließfähige Süßstoffzusammensetzungen in Form von Süßstoffwürfeln, welche zum Süßen von flüssigen Nahrungsmitteln geeignet sind und einen reduzierten Kaloriengehalt gegenüber konventionellem Würfelzucker aufweisen. Die Süßstoffwürfel weisen einerseits einen Süßstoff und andererseits einen kalorienarmen Füllstoff als Inhaltsstoffe auf, wobei die Süßstoffwürfel gegenüber konventionellen Zuckerwürfeln äquivalente Dimensionen sowie ein äquivalentes Süßungsprofil besitzen sollen.

Die US 2008/0032023 A1 betrifft eine lose Süßstoffzusammensetzung in Agglomeratform, welche auf einer Mischung von Maltodextrin und einem Intensivsüßstoff basiert. Die Zusammensetzung wird vorzugsweise durch Sprühtrocknung unter Einführung von CO₂ in den Zustrom der Sprühtrocknungsanlage hergestellt.

Die EP 0 237 403 A1 betrifft eine Instant-Getränkezusammensetzung, welche sich in Wasser schnell auflöst und zur Herstellung eines Getränks geeignet ist. Die Zusammensetzung weist eine verpresste Zuckerkomponente, insbesondere mikrokristalline Lactose, sowie L-Leucin als Schmiermittel auf. Weiterhin ist es vorgesehen, dass die Zusammensetzung Aspartam als Süßstoff enthält.

Ausgehend vom Stand der Technik lag der Erfindung die Aufgabe zugrunde, die zuvor geschilderten Nachteile im Stand der Technik zu überwinden.

Insbesondere lag der Erfindung die Aufgabe zugrunde, eine kalorienreduzierte Zusammensetzung zu finden, die leichter herzustellen ist, in Aussehen und Erscheinungsform attraktiver erscheint und von hoher und dauerhafter sensorischer Qualität ist.

Die Anmelderin hat überraschenderweise herausgefunden, dass die der Erfindung zugrundeliegende Aufgabe durch eine kompaktierte, insbesondere verpresste Zusammensetzung mit reduziertem physiologischem Brennwert (Energiegehalt) zum Süßen von Lebensmitteln, insbesondere in Form von Kompaktaten, Tabletten, Pillen oder dergleichen, vorzugsweise Süßstofftabletten, gelöst werden kann, wobei die Zusammensetzung mindestens einen Süßstoff umfasst, wobei der Süßstoff Sucralose oder ein Sucralosederivat darstellt, und die Zusammensetzung weiterhin mindestens ein Schmiermittel enthält.

Gegenstand der vorliegenden Erfindung ist somit eine Zusammensetzung mit reduziertem physiologischem Brennwert (Energiegehalt) gemäß Anspruch 1. Weitere, insbesondere vorteilhafte Ausgestaltungen sind Gegenstand der diesbezüglichen Unteransprüche.

Weiterer Gegenstand der vorliegenden Erfindung ist ein Verfahren zur Herstellung der kompaktierten, insbesondere verpressten Zusammensetzung gemäß Anspruch 7. Weitere, insbesondere vorteilhafte Ausgestaltungen dieses Erfindungsaspektes sind Gegenstand des diesbezüglichen Unteranspruchs.

Schließlich ist Gegenstand der vorliegenden Erfindung die Verwendung der Zusammensetzungen nach der vorliegenden Erfindung gemäß Anspruch 9.

Es versteht sich von selbst, dass im folgenden besondere Ausgestaltungen und Ausführungsformen, welche nur im Zusammenhang mit einem Erfindungsaspekt beschrieben sind, auch in Bezug auf die anderen Erfindungsaspekte entsprechend gelten, ohne dass dies einer ausdrücklichen Erwähnung bedarf.

Bei allen nachstehend genannten relativen bzw. prozentualen, insbesondere gewichtsbezogenen Mengenangaben ist zudem zu beachten, dass diese im Rahmen der vorliegenden Erfindung vom Fachmann derart auszuwählen sind, dass in der Summe - gegebenenfalls unter Einbeziehung weiterer Komponenten bzw. Inhaltsstoffe bzw. Zusatzstoffe bzw. Bestandteile, insbesondere wie nachfolgend definiert - stets 100 % resultieren. Dies versteht sich für den Fachmann aber von selbst.

Im übrigen gilt, dass der Fachmann anwendungsbezogen oder einzelfallbedingt von nachfolgend aufgeführten Mengenangaben abweichen kann, ohne dass er den Rahmen der vorliegenden Erfindung verlässt.

Gegenstand der vorliegenden Erfindung - gemäß einem ersten erfindungsgemäßen Aspekt - ist somit eine kompaktierte, insbesondere verpresste Zusammensetzung mit reduziertem physiologischem Brennwert (Energiegehalt) zum Süßen von Lebensmitteln, insbesondere in Form von Kompaktaten, Tabletten, Pillen oder dergleichen, vorzugsweise Süßstofftabletten, wobei die Zusammensetzung mindestens einen Süßstoff umfasst,
- wobei die Menge an Sucralose 5 bis 15 Gew.-%, bezogen auf die Zusammensetzung, beträgt;
- wobei die Zusammensetzung weiterhin Leucin als Schmiermittel enthält, wobei die Menge an Leucin 1 bis 12 Gew.-%, bezogen auf die Zusammensetzung, beträgt; und
- wobei das Gewichtsverhältnis von Süßstoff zu Schmiermittel zwischen 5 : 1 und 1 : 5 liegt.

Sucralose ist ein an sich bekannter Süßstoff, der auch unter den Bezeichnungen Chlorsucrose, Trichlorgalactosaccharose (TGS) oder 1,6-Dichlor-1,6-dideoxy-β-D-fructofuranosyl-4-chlor-4-deoxy-α-D-galactopyranosid bekannt ist. Die Süßkraft von Sucralose liegt um ein Vielfaches über der von Saccharose, so dass die erfindungsgemäße Zusammensetzung einen verringerten Brennwert aufweist.

Im Unterschied zu Zuckeraustauschstoffen versteht man unter Süßstoffen Verbindungen synthetischer oder natürlicher Herkunft, die keinen oder im Verhältnis zur Süßkraft einen vernachlässigbaren physiologischen Brennwert besitzen, weswegen sie im Englischen aus als *"non-nutritive sweeteners"* bezeichnet werden, und eine um ein Vielfaches höhere Süßkraft als Saccharose aufweisen. Die Süßkraft einer Verbindung ist durch die Verdünnung gegeben, bei der sie ebenso süß wie eine Saccharoselösung schmeckt (isosüße Lösung). Für weitere Einzelheiten zu dem Begriff der Süßstoffe kann insbesondere verwiesen werden auf Römpp Chemielexikon, 10. Auflage, Georg-Thieme-Verlag, Stuttgart/New York, Band 5, 1998, Seiten 4302 bis 4304, Stichwort: "Süßstoffe", sowie die dort referierte Literatur, deren jeweiliger Inhalt hiermit durch Bezugnahme eingeschlossen ist.

Die erfindungsgemäße Zusammensetzung bietet die Möglichkeit einer kalorienarmen Süßung. Gemäß einer bevorzugten Ausführungsform liegt der physiologische Brennwert der Zusammensetzung (Energiegehalt) im Bereich von 0,5 bis 10 kcal/g, insbesondere im Bereich von 2 bis 6 kcal/g, vorzugsweise im Bereich von 2,5 bis 3,6 kcal/g.

Weitere Vorteile der erfindungsgemäßen Zusammensetzung liegen in einer leichteren bzw. effizienteren Herstellbarkeit. Die Kompaktate lassen sich ohne Verkleben homogen herstellen. Es hat sich überraschend herausgestellt, dass die erfindungsgemäßen Kompaktate eine sehr konstante, bleibende sensorische Qualität zeigen und dementsprechend mechanisch und hinsichtlich ihrer Zusammensetzung von konstanter Qualität sind. Dies gelingt überraschend durch den Einsatz eines Schmiermittels.

Die vorteilhafte Herstellbarkeit der erfindungsgemäßen Zusammensetzung ist also auf das Schmiermittel Leucin zurückzuführen.

Die verwendeten Mengen und Mengenverhältnisse haben einen Einfluss auf die Verarbeitbarkeit der Zusammensetzung und deren sensorische Qualität.

Es hat sich überraschend herausgestellt, dass eine vorteilhafte Zusammensetzung folgende Mengen enthält:
Die Menge an Sucralose oder Sucralosederivaten beträgt erfindungsgemäß 5 bis 15 Gew.-%, bezogen auf die Zusammensetzung.

Die Menge an Schmiermittel(n) beträgt vorteilhafterweise 6 bis 12 Gew.-%, bezogen auf die Zusammensetzung.

Dabei ist eine Zusammensetzung vorgesehen, bei welcher das Gewichtsverhältnis von Süßstoff zu Schmiermittel im Bereich zwischen 5: 1 und 1 : 5, bevorzugt zwischen 2 : 1 und 1 : 2, liegt.

Erfindungsgemäß kann die Zusammensetzung darüber hinaus gegebenenfalls auch weitere Inhaltsstoffe umfassen. Diese können beispielsweise das Geschmacksempfinden positiv beeinflussen. In einer bevorzugten Ausführungsform enthält die erfindungsgemäße Zusammensetzung als weitere(n) Inhaltsstoff(e) insbesondere ein oder mehrere Zucker und/oder Zuckeralkohole, insbesondere wobei die Zucker ausgewählt sein können aus Mono- oder Disacchariden, insbesondere aus der Gruppe von Saccharose, Mannose, Maltose, Dextrose, Lactose, Glucose, Xylose, Isomaltulose und deren Mischungen, wobei Lactose besonders bevorzugt ist.

Besonders bevorzugt ist eine Ausführungsform, bei welcher in der Zusammensetzung die Menge an Zucker(n) und/oder Zuckeralkohol(en), besonders bevorzugt die Menge an Lactose, 20 bis 90 Gew.-%, insbesondere 30 bis 80 Gew.-%, bevorzugt 40 bis 70 Gew.-%, bezogen auf die Zusammensetzung, beträgt.

Die zuvor angeführten Zuckeralkohole werden auch zu den sogenannten Zuckeraustauschstoffen gezählt. Unter dem Begriff der Zuckeraustauschstoffe versteht man eine Sammelbezeichnung für Stoffe, welche anstelle von Saccharose zur Süßung von Lebensmitteln verwendet werden. Im Gegensatz zu den mitunter intensiv schmeckenden Süßstoffen, von denen der Begriff der Zuckeraustauschstoffe im allgemeinen abgegrenzt wird, werden Zuckeraustauschstoffe technologisch wie Saccharose eingesetzt, d. h. sie besitzen einen "Körper" und einen physiologischen Brennwert (nutritive Zuckeraustauschstoffe). Die Süßkraft entspricht in weiten Grenzen etwa der von Saccharose. Der physiologische Vorteil der Zuckeraustauschstoffe im Vergleich zur Saccharose liegt in der insulinunabhängigen Metabolisierung (Diabetiker) und in der zum Teil verminderten kariogenen Wirkung. Für einige Zuckeraustauschstoffe, wie z. B. Xylit, ist sogar eine antikariogene Wirkung beschrieben. Die Zuckeraustauschstoffe und die davon verschiedenen Süßstoffe werden gemeinsam als Süßungsmittel bezeichnet. Für weitergehende Einzelheiten zu dem Begriff der Zuckeraustauschstoffe kann beispielsweise verwiesen werden auf Römpp Lexikon Chemie, Band 6, 10. Auflage, Georg-Thieme-Verlag, Stuttgart/New York, 1999, Seite 5098 bis 5100, Stichwort: "Zuckeraustauschstoffe", und auf Römpp Lexikon Lebensmittelchemie, 9. Auflage, Georg-Thieme-Verlag, Stuttgart/New York, Seite 955, Stichwort: "Zuckeraustauschstoffe" sowie auf die dort jeweils referierte Literatur, deren jeweiliger Inhalt hiermit durch Bezugnahme eingeschlossen ist.

Der Begriff der zu den Zuckeraustauschstoffen zählenden Zuckeralkohole (Polyole), wie er erfindungsgemäß verwendet wird, ist eine Gruppenbezeichnung für im allgemeinen kristalline, gut wasserlösliche Polyhydroxyverbindungen, die durch Reduktion der Carbonylfunktion aus Zuckern entstehen. Hierbei werden insbesondere Monosaccharid-Zuckeralkohole und Disaccharid-Zuckeralkohole unterschieden. Für weitergehende Einzelheiten zu dem Begriff der Zuckeralkohole kann insbesondere verwiesen werden auf Römpp Lexikon Chemie, 10. Auflage, GeorgThieme-Verlag, Stuttgart/New York, Band 6, 1999, Seite 5097, Stichwort: "Zuckeralkohole", und auf Römpp Lexikon Lebensmittelchemie, 9. Auflage, GeorgThieme-Verlag, Stuttgart/New York, 1995, Seiten 1953/954, Stichwort: "Zuckeralkohole" sowie auf die dort jeweils referierte Literatur, deren jeweiliger Inhalt durch Bezugnahme eingeschlossen ist.

Ferner können gemäß einer weiteren bevorzugten Ausführungsform weitere Inhaltsstoffe oder Additive in der erfindungsgemäßen Zusammensetzung enthalten sein. Eine bevorzugte Zusammensetzung enthält insbesondere mindestens einen weiteren Inhaltsstoff und/oder mindestens ein weiteres Additiv, insbesondere mindestens ein konsistenzsteuerndes Mittel und/oder Verdickungsmittel, insbesondere wobei der weitere Inhaltsstoff und/oder das weitere Additiv mindestens ein Polysaccharid und/oder ein Polysaccharidgemisch sein kann, vorzugsweise ausgewählt aus α-1,4/α-1,6-glykosidisch verknüpften Polysacchariden und/oder vorzugsweise ausgewählt aus Stärke und Stärkederivaten, insbesondere Maisstärke, Cellulose oder Cellulosederivaten, insbesondere Natriumcarboxymethylcellulose, sowie deren Mischungen.

Was die erfindungsgemäß verwendbaren Stärkederivate anbelangt, so können diese ausgewählt sein aus Stärkeabbauprodukten, insbesondere Dextrinen und Maltodextrinen, vorzugsweise Maltodextrinen. Für weitere Einzelheiten zu Dextrinen und Maltodextrinen kann insbesondere verwiesen werden auf Römpp Chemielexikon, 10. Auflage, Georg-Thieme-Verlag, Stuttgart/New York, Band 2, 1997, Seite 928, Stichwort: "Dextrine", und Band 4, 1998, Seite 2513, Stichwort: "Maltodextrine", und auf Römpp Lexikon Lebensmittelchemie, Georg-Thieme-Verlag, Stuttgart/New York, 9. Auflage, 1995, Seite 213, Stichwort: "Dextrine", und Seite 518, Stichwort: "Maltodextrine", sowie auf die dort jeweils referierte Literatur, deren jeweiliger Inhalt durch Bezugnahme eingeschlossen ist.

Gemäß einer bevorzugten Ausführungsform der vorliegenden Erfindung umfasst die Zusammensetzung weitere Inhaltsstoffe und/oder Additive, insbesondere konsistenzsteuerndem Mittel und/oder Verdickungsmittel, in einer Menge von 1 bis 30 Gew.-%, insbesondere 5 bis 20, bevorzugt 10 bis 15 Gew.-%, bezogen auf die Zusammensetzung.

Gegebenenfalls können in der Zusammensetzung weitere Inhalts- und/oder Hilfsstoffe enthalten sein. Die können insbesondere ausgewählt sein aus Aromen oder Aromastoffen, Säuerungsmitteln, Konservierungsmitteln, Farbstoffen, Vitaminen, Mineralstoffen, Stabilisatoren, Füllstoffen, Pressmitteln, Sprengmitteln oder dergleichen sowie deren Mischungen.

Neben den Inhaltsstoffen ist auch, wie oben bereits erwähnt, die äußere Erscheinungsform der erfindungsgemäßen Zusammensetzung von Bedeutung. Die Schüttdichte ist beispielsweise ein Maß für die gefühlte Schwere der Zusammensetzung, die bei der Kaufentscheidung des Produkts eine Rolle spielt. Besonders bevorzugt liegt die Schüttdichte der Zusammensetzung im Bereich von 250 bis 800 g/l, insbesondere 400 bis 650 g/l, vorzugsweise 500 bis 600 g/l.

Unter dem Begriff der Schüttdichte ist im allgemeinen der Quotient aus der Masse und dem eingenommenen Volumen, das Zwischenräume und, falls zusätzlich vorhanden, auch Hohlräume (z. B. Poren) einschließt, zu verstehen. Zur Bestimmung der Schüttdichte kann insbesondere auf die DIN ISO 607: 1984-01 verwiesen werden. Man bestimmt die Schüttdichte beispielsweise, indem man die betreffende Zusammensetzung in einen Messkasten, Messbecher, Messzylinder oder dergleichen schüttet und das Gewicht feststellt. Höher als die Schüttdichte, deren Reziprokes das Schüttvolumen ist, liegen die sogenannte Rütteldichte und erst recht die sogenannte Stampfdichte. Für weitere Einzelheiten zum Begriff der Schüttdichte kann insbesondere verwiesen werden auf Römpp Chemielexikon, 10. Auflage, Georg-Thieme-Verlag, Stuttgart/New York, Band 5, 1998, Seite 3990, Stichwort: "Schüttdichte".

Neben der Schüttdichte ist auch die rein äußere Form bzw. Erscheinungsform von Bedeutung. Gemäß einer besonders bevorzugten Ausführungsform haben die Kompaktate, Tabletten, Pillen oder dergleichen in deren durchschnittlichen längsten Ausdehnung ein Maß von 0,5 bis 10 mm, insbesondere 1 bis 8 mm, vorzugsweise 4 bis 6 mm. Wenn beispielsweise die Kompaktate die Form von quaderförmigen Tabs haben, ist beispielsweise die Länge des Quaders die längste Ausdehnung, und im Fall von zylindrischen Tabletten oder Pillen der Durchmesser.

Hinsichtlich des Absolutgewichtes haben die Kompaktate, Tabletten, Pillen oder dergleichen bevorzugt ein mittleres Gewicht, das zwischen 10 und 200 mg, vorzugsweise 25 und 75 mg, insbesondere 40 und 60 mg, liegt.

Kaufentscheidend ist auch die Quantität der Süße, ausgedrückt durch die Süßkraft. Gemäß einer bevorzugten Ausführungsform der erfindungsgemäßen Zusammensetzung entspricht die gewichtsbezogene Süßkraft der Zusammensetzung der 10-bis 200fachen, insbesondere der 25- bis 100fachen, vorzugsweise der 50- bis 70fachen Süßkraft von Saccharose.

Die erfindungsgemäße Zusammensetzung besitzt vorteilhafterweise einen gewissen Feuchtegehalt (Restfeuchte). So sollte die erfindungsgemäße Zusammensetzung, bezogen auf die Zusammensetzung, eine Gesamtrestfeuchte von 0,5 bis 8 Gew.-%, insbesondere 1 bis 5 Gew.-%, vorzugsweise 2 bis 4 Gew.-%, aufweisen. Der maximale Gesamtrestfeuchtegehalt sollte in diesem Zusammenhang 8 Gew.-%, insbesondere 5 Gew.-%, vorzugsweise 4 Gew.-%, bezogen auf die Zusammensetzung, nicht überschreiten. Die Einstellung des Feuchtigkeitsgehaltes bzw. der Gesamtrestfeuchte in der Zusammensetzung dient einerseits der Erhöhung der Stabilität, insbesondere der Lagerungs- und Alterungsbeständigkeit, und zum anderen der Verbesserung der Verklumpungseigenschaften. In diesem Zusammenhang bezieht sich der Begriff "Gesamtrestfeuchte", wie er im Rahmen der vorliegenden Erfindung verwendet wird, auf den Gesamtfeuchtegehalt der erfindungsgemäßen Zusammensetzung und umfasst somit sowohl zugegebene Feuchtigkeit, beispielsweise in Form von Wasser, als auch bereits in den Komponenten inhärent vorhandene Feuchtigkeit, wie beispielsweise Kristallwasser oder dergleichen.

Aufgrund der geforderten Handhabbarkeit sollte zudem eine gewisse Festigkeit (Tablettenfestigkeit), insbesondere Bruchfestigkeit, der in Form von Kompaktaten, Tabletten, Pillen oder dergleichen, vorzugsweise Süßstofftabletten, vorliegenden Zusammensetzung gegeben sein: Üblicherweise weist die in Form von Kompaktaten, Tabletten, Pillen oder dergleichen, vorzugsweise Süßstofftabletten, vorliegende Zusammensetzung eine Festigkeit (Tablettenfestigkeit), insbesondere Bruchfestigkeit, von mindestens 5 Newton, insbesondere mindestens 6 Newton, vorzugsweise im Bereich von 5 bis 100 Newton, besonders bevorzugt 5 bis 50 Newton, ganz besonders bevorzugt 6 bis 30 Newton, auf.

Weiterer Gegenstand der vorliegenden Erfindung - gemäß einem **zweiten** Aspekt der vorliegenden Erfindung - ist ein Verfahren zur Herstellung einer erfindungsgemäßen Zusammensetzung, wobei Sucralose oder ein Sucralosederivat zusammen mit mindestens einem Schmiermittel kombiniert und dann kompaktiert, insbesondere verpresst wird, vorzugsweise zu Kompaktaten, Tabletten, Pillen oder dergleichen, bevorzugt Süßstofftabletten, verarbeitet wird, wobei als Schmiermittel Leucin eingesetzt wird und wobei ein Gewichtsverhältnis von Süßstoff zu Schmiermittel zwischen 5 : 1 und 1 : 5 eingesetzt wird.

Gemäß einer bevorzugten Ausführungsform des erfindungsgemäßen Verfahrens wird die eingesetzte Gesamtmenge an Sucralose oder Sucralosederivat mindestens auf einen ersten und mindestens einen zweiten Teil aufgeteilt, wobei der erste Teil der Sucralose oder des Sucralosederivats zunächst mit dem Schmiermittel kombiniert und/oder gemischt wird, dann gegebenenfalls mit mindestens einem weiteren Inhaltsstoff und/oder Additiv kombiniert wird, nachfolgend mit dem zweiten bzw. restlichen Teil der Sucralose oder des Sucralosederivates kombiniert wird und schließlich unter Formgebung kompaktiert, insbesondere verpresst wird. Mit Hilfe dieser vorteilhaften Ausführungsform des erfindungsgemäßen Verfahrens können die Partikel aus Sucralose oder Sucralosederivat mit dem Schmiermittel beschichtet werden, so dass die physikalisch-chemischen Eigenschaften der Kompaktate, Tabletten, Pillen oder dergleichen verbessert werden. Insbesondere werden (druck)stabilere Tabletten erhalten.

Gemäß einer weiteren bevorzugten Ausführungsform erfolgt das Kompaktieren unter Druck. Der Fachmann führt das Kompaktieren bzw. Verpressen unter Druck in einer ihm an sich bekannten Art und Weise durch. Das Kompaktieren bzw. Verpressen erfolgt insbesondere bei einem Druck im Bereich von 0,1 bis 100 t/cm², insbesondere 1 bis 50 t/cm², bevorzugt 2 bis 30 t/cm².

Vorteilhafterweise erfolgt das Kompaktieren, insbesondere Verpressen, unter Umgebungs- bzw. Normalbedingungen (d. h. Umgebungstemperatur, insbesondere 20 bis 35 °C), wobei im Rahmen des Kompaktierens eine durch den Kompaktierungsvorgang induzierte Erwärmung stattfinden kann.

Für weitergehende diesbezügliche Einzelheiten zu diesem Erfindungsaspekt kann Bezug genommen werden auf die obigen Ausführungen zu der erfindungsgemäßen Zusammensetzung, welche in Bezug auf das erfindungsgemäße Verfahren entsprechend gelten.

Weiterer Gegenstand der vorliegenden Erfindung - gemäß einem **dritten** Aspekt der vorliegenden Erfindung - ist die Verwendung der erfindungsgemäßen Zusammensetzung gemäß dem ersten Erfindungsaspekt zum Süßen von Lebensmitteln, insbesondere Getränken oder anderen flüssigen bis pastösen Nahrungsmitteln oder aber von festen Nahrungsmitteln.

Für weitergehende diesbezügliche Einzelheiten zu diesem Erfindungsaspekt kann Bezug genommen werden auf die obigen Ausführungen zu den übrigen erfindungsgemäßen Aspekten, welche in Bezug auf die erfindungsgemäße Verwendung entsprechend gelten.

Weitere Ausgestaltungen, Abwandlungen und Variationen sowie Vorteile der vorliegenden Erfindung sind für den Fachmann beim Lesen der Beschreibung ohne weiteres erkennbar und realisierbar, ohne dass er dabei den Rahmen der vorliegenden Erfindung verlässt.

Die vorliegende Erfindung wird anhand der folgenden Ausführungsbeispiele veranschaulicht, welche die vorliegende Erfindung jedoch nicht beschränken.

### Ausführungsbeispiele:

Beispielrezepturen für Süßstofftabletten:
Beispiel Süßstofftablette 1 (Vergleich)
   5 - 70 % L-Aspartyl-L-phenylalanin (Aspartam)
   30 - 90 % D-Galactopyranosyl-β-(1-4)-D-glucopyranose (Laktose)
   1 - 15 % Carboxymethylcellulose
Beispiel Süßstofftablette 2 (Vergleich)
   1-7 % Benzoesäuresulfimid (Saccharin)
   10 - 70 % Natrlumcyclohexylsulfamat (Cyclamat)
   1 - 10 % D-Galactopyranosyl-β-(1-4)-D-glucopyranose (Laktose)
   1 - 15 % Natriumcitrat
Beispiel Süßstofftablette 3 (Vergleich)
   1 - 20 % L-Aspartyl-L-phenylalanin (Aspartam)
   2 - 40 % 6-Methyl-3,4-dihydro-1,2,3-oxathiazin-4-on-2,2-dioxid (Acesulfam) 5 - 50 % D-Galactopyranosyl-β-(1-4)-D-glucopyranose (Laktose) 1-4 % 2-Amino-4-methyl-pentan-1-säure (Leucin)
   1 - 15 % Carboxymethylcellulose
Beispiel Süßstofftablette 4 (Vergleich)
   14 - 36 % Trichlorgalaktosaccharose (Sucralose)
   30 - 60 % D-Galactopyranosyl-β-(1-4)-D-glucopyranose (Laktose)
   1 - 15 % α-1,4/α-1,6-glycosidisch verknüpfte Polymere (Polysaccharid)
Beispiel Süßstofftablette 5 (Vergleich)
   10 - 20 % Trichlorgalaktosaccharose (Sucralose)
   4 - 16 % 2-Amino-4-methyl-pentan-1-säure (Leucin)
   30 - 60 % D-Galactopyranosyl-β-(1-4)-D-glucopyranose (Laktose)
   1 - 15 % α-1,4/α-1,6-glycosidisch verknüpfte Polymere (Polysaccharid)

### Versuchsreihe 1

Alle Rezepturen wurden in der üblichen Weise hergestellt. Dabei wurden alle Rohwaren für die jeweilige Anwendung abgewogen und miteinander vermischt. Die einzelnen Chargen wurden gepresst. Als Presse wurde eine Versuchspresse der Firma Kilian der Baureihe NRD 33 eingesetzt. Als maximaler Pressdruck stehen hier 10 Tonnen zur Verfügung. Bis auf die Beispielrezeptur 4 konnten allen Varianten problemlos gepresst werden. Das Beispiel 4 dagegen ließ sich schlecht pressen. Die Mischung klebte an den Stempeln und die einzelnen Tablettengewichte schwankten stark. Auch die Tablettenform war ungenügend.

### Versuchsreihe 2

Die Beispiele 1 bis 3 wurden wie gewohnt gemischt und ohne Beanstandungen gepresst. Eine Rezeptur gemäß Beispiel 5 wurde so gemischt, dass erst die Sucralose mit dem Leucin vermischt wird. Nach Zugabe der weiteren Komponenten und deren Vermischung wurde alles gepresst. Das Ergebnis war eine noch weiter verbesserte, insbesondere stabilere Tablettenqualität.

### Versuchsreihe 3

Es wurden nur noch Mischungsvarianten des Beispiels 5 gemischt und verpresst. Die Variante, bei welcher nur ein Teil des Leucins mit der Sucralose vorgemischt wurde, dann die Stärke, dann die Laktose und zum Schluss das Leucin zugegeben wurde, erzielte nochmals verbesserte Tablettenqualitäten.

### Ergebnis

Während die Rezepturen der Beispiele 1 bis 3 in der Versuchsreihe 1 und 2 Tablettenhärten von 8 bis 18 N liefern, liefern die erfindungsgemäßen Rezepturen gemäß Beispiel 5 in der Versuchsreihe 1 Tabletten mit vergleichbaren Härten, welche in den Versuchsreihen 2 und 3 dann noch um 15 % (Versuchsreihe 2) bzw. 25 % (Versuchsreihe 3) gesteigert werden konnten.

Nach Abschluss der Technikumsversuche wurden die Mischungen auf Produktionspressen, wie sie beispielsweise von den Herstellerfirmen Fette und Kilian bekannt sind, wiederholt. Dabei konnten vergleichbare Ergebnisse mit den erfindungsgemäßen Mischungsvarianten des Beispiels 5 erzielt werden wie im Technikumsmaßstab entsprechend den vorangehenden Versuchsreihen 1 bis 3.

In nachfolgenden Stabilitätsversuchen, die bei unterschiedlichen Lagerbedingungen (Temperatur und Zeit) ausgeführt wurden, konnten keinerlei Stabilitätsverluste und keinerlei sensorische Veränderungen festgestellt werden.

## Patentansprüche

1. Kompaktierte, insbesondere verpresste Zusammensetzung mit reduziertem physiologischem Brennwert (Energiegehalt) zum Süßen von Lebensmitteln, insbesondere in Form von Kompaktaten, Tabletten, Pillen oder dergleichen, vorzugsweise Süßstofftabletten, wobei die Zusammensetzung mindestens einen Süßstoff umfasst, wobei der Süßstoff Sucralose ist,
**dadurch gekennzeichnet,**
**dass** die Menge an Sucralose 5 bis 15 Gew.-%, bezogen auf die Zusammensetzung, beträgt;
**dass** die Zusammensetzung weiterhin Leucin als Schmiermittel enthält, wobei die Menge an Leucin 1 bis 12 Gew.-%, bezogen auf die Zusammensetzung, beträgt; und
**dass** das Gewichtsverhältnis von Süßstoff zu Schmiermittel zwischen 5 : 1 und 1 : 5 liegt.

2. Zusammensetzung nach Anspruch 1, **dadurch gekennzeichnet, dass** das Gewichtsverhältnis von Süßstoff zu Schmiermittel zwischen 2 : 1 und 1 : 2 liegt.

3. Zusammensetzung nach Anspruch 1 oder 2, **dadurch gekennzeichnet, dass** die Menge an Leucin 6 bis 12 Gew.-%, bezogen auf die Zusammensetzung, beträgt.

4. Zusammensetzung nach einem der vorangehenden Ansprüche, **dadurch gekennzeichnet, dass** die Zusammensetzung als weiteren Inhaltsstoff ein oder mehrere Zucker und/oder Zuckeralkohole enthält, insbesondere wobei die Zucker ausgewählt sind aus Mono- oder Disacchariden, insbesondere aus der Gruppe von Saccharose, Mannose, Maltose, Dextrose, Lactose, Glucose, Xylose, Isomaltulose und deren Mischungen, wobei Lactose besonders bevorzugt ist, und/oder insbesondere wobei die Menge an Zucker(n) und/oder Zuckeralkohol(en), besonders bevorzugt die Menge an Lactose, 20 bis 90 Gew.-%, insbesondere 30 bis 80 Gew.-%, bevorzugt 40 bis 70 Gew.-%, bezogen auf die Zusammensetzung, beträgt.

5. Zusammensetzung nach einem der vorangehenden Ansprüche, **dadurch gekennzeichnet,**
**dass** die Zusammensetzung mindestens einen weiteren Inhaltsstoff und/oder mindestens ein weiteres Additiv, insbesondere mindestens ein konsistenzsteuerndes Mittel und/oder Verdickungsmittel, enthält, insbesondere wobei der weitere Inhaltsstoff und/oder das weitere Additiv mindestens ein Polysaccharid oder ein Polysaccharidgemisch ist, vorzugsweise ausgewählt aus α-1,4/α-1,6-glykosidisch verknüpften Poly-sacchariden und/oder vorzugsweise ausgewählt aus Stärke und Stärkederivaten, insbesondere Maisstärke, Cellulose oder Cellulosederivaten, insbesondere Natriumcarboxymethylcellulose, sowie deren Mischungen, und/oder insbesondere wobei die Menge an weiterem Inhaltsstoff und/oder weiterem Additiv, insbesondere konsistenzsteuerndem Mittel und/oder Verdickungsmittel, 1 bis 30 Gew.-%, insbesondere 5 bis 20, bevorzugt 10 bis 15 Gew.-%, bezogen auf die Zusammensetzung, beträgt; und/oder dass die Zusammensetzung weitere Inhalts- und/oder Hilfsstoffe umfasst, insbesondere ausgewählt aus Aromen oder Aromastoffen, Säuerungsmitteln, Konservierungsmitteln, Farbstoffen, Vitaminen, Mineralstoffen, Stabilisatoren, Füllstoffen, Pressmitteln, Sprengmitteln und deren Mischungen.

6. Zusammensetzung nach einem der vorangehenden Ansprüche, **dadurch gekennzeichnet,**
**dass** die Schüttdichte der Zusammensetzung im Bereich von 250 bis 800 g/l, insbesondere 400 bis 650 g/l, vorzugsweise 500 bis 600 g/l liegt; und/oder dass die gewichtsbezogene Süßkraft der Zusammensetzung der 10- bis 200fachen, insbesondere der 25- bis 100fachen, vorzugsweise der 50- bis 70fachen Süßkraft von Saccharose entspricht; und/oder
**dass** der physiologische Brennwert der Zusammensetzung (Energiegehalt) im Bereich von 0,5 bis 10 kcal/g, insbesondere im Bereich von 2 bis 6 kcal/g, vorzugsweise im Bereich von 2,5 bis 3,6 kcal/g, liegt.

7. Zusammensetzung nach einem der vorangehenden Ansprüche, **dadurch gekennzeichnet,**
**dass** die Form der Kompaktate, Tabletten, Pillen oder dergleichen in deren durchschnittlichen längsten Ausdehnung ein Maß von 0,5 bis 10 mm, insbesondere 1 bis 8 mm, vorzugsweise 4 bis 6 mm, aufweist; und/oder
**dass** das mittlere Gewicht der einzelnen Kompaktate, Tabletten, Pillen oder dergleichen jeweils zwischen 10 und 200 mg, vorzugsweise 25 und 75 mg, insbesondere 40 und 60 mg, liegt; und/oder
**dass** die Zusammensetzung, bezogen auf die Zusammensetzung, eine Gesamtrestfeuchte von 0,5 bis 8 Gew.-%, insbesondere 1 bis 5 Gew.-%, vorzugsweise 2 bis 4 Gew.-%, aufweist; und/oder
**dass** die in Form von Kompaktaten, Tabletten, Pillen oder dergleichen, vorzugsweise Süßstofftabletten, vorliegende Zusammensetzung eine Festigkeit (Tablettenfestigkeit), insbesondere Bruchfestigkeit, von mindestens 5 Newton, insbesondere mindestens 6 Newton, vorzugsweise im Bereich von 5 bis 100 Newton, besonders bevorzugt 5 bis 50 Newton, ganz besonders bevorzugt 6 bis 30 Newton, aufweist.

8. Verfahren zur Herstellung einer Zusammensetzung gemäß den Ansprüchen 1 bis 7, wobei Sucralose zusammen mit mindestens einem Schmiermittel kombiniert und dann kompaktiert, insbesondere verpresst wird, vorzugsweise zu Kompaktaten, Tabletten, Pillen oder dergleichen, bevorzugt Süßstofftabletten, verarbeitet wird, wobei als Schmiermittel Leucin eingesetzt wird und wobei ein Gewichtsverhältnis von Süßstoff zu Schmiermittel zwischen 5 : 1 und 1 : 5 eingesetzt wird.

9. Verfahren nach Anspruch 8, **dadurch gekennzeichnet,**
**dass** die eingesetzte Gesamtmenge an Sucralose mindestens auf einen ersten und einen zweiten Teil aufgeteilt wird, wobei der erste Teil der Sucralose zunächst mit dem Schmiermittel kombiniert und/oder gemischt wird, dann gegebenenfalls mit mindestens einem weiteren Inhaltsstoff und/oder Additiv kombiniert wird, nachfolgend mit dem zweiten bzw. restlichen Teil der Sucralose kombiniert wird und schließlich unter Formgebung kompaktiert, insbesondere verpresst wird; und/oder
**dass** das Kompaktieren unter Druck erfolgt, insbesondere bei einem Druck im Bereich von 0,1 bis 100 t/cm², insbesondere 1 bis 50 t/cm², bevorzugt 2 bis 30 t/cm².

10. Verwendung einer Zusammensetzung gemäß einem der Ansprüche 1 bis 7 zum Süßen von Lebensmitteln, insbesondere Getränken oder anderen flüssigen bis pastösen Nahrungsmitteln oder von festen Nahrungsmitteln.

## Claims

1. A compacted, in particular pressed composition, having a reduced physiological calorific value (energy content) for the sweetening of food, in particular in the form of compactates, tablets, pills, or the like, preferably sweetener tablets, wherein the composition comprises at least one sweetener, wherein the sweetener is sucralose,
**characterized in that**
the amount of sucralose is 5 to 15% by weight, based on the composition;
the composition further contains leucine as a lubricant, wherein the amount of leucine is 1 to 12% by weight, based on the composition; and
the weight ratio of sweetener to lubricant is between 5:1 and 1:5.

2. The composition according to claim 1, **characterized in that** the weight ratio of sweetener to lubricant is between 2:1 and 1:2.

3. The composition according to claims 1 or 2, **characterized in that** the amount of leucine is 6 to 12% by weight, based on the composition.

4. The composition according to one of the preceding claims, **characterized in that** the composition contains one or more sugars and/or sugar alcohols as additional active ingredient, in particular, wherein the sugars are selected from mono or disaccharides, in particular from the group of saccharose, mannose, maltose, dextrose, lactose, glucose, xylose, isomaltulose, and the mixtures thereof, wherein lactose is particularly preferred, and/or in particular, wherein the amount of sugar(s) and/or sugar alcohol(s), in particular the amount of lactose, is 20 to 90% by weight, in particular 30 to 80% by weight, preferably 40 to 70% by weight, based on the composition.

5. The composition according to one of the preceding claims, **characterized in that** the composition contains at least one additional active ingredient, and/or at least one additional additive, in particular at least one consistency controlling agent and/or thickening agent, in particular, wherein the additional active ingredient and/or the additional additive is at least one polysaccharide or a polysaccharide mixture, preferably selected from α-1,4/α-1,6-gycosidically linked polysaccharides, and/or preferably selected from starch and starch derivatives, in particular corn starch, cellulose, or cellulose derivatives, in particular sodium carboxy methyl cellulose, as well as the mixtures thereof, and/or in particular, wherein the amount of additional active ingredient and/or additional additive, in particular the consistency controlling agent and/or the thickening agent, is 1 to 30% by weight, in particular 5 to 20, preferably 10 to 15% by weight, based on the composition; and/or
the composition comprises additional active ingredients and/or adjuvants, in particular selected from flavors or flavorings, acidifiers, preservatives, dyes, vitamins, minerals, stabilizers, fillers, compacting agents, disintegrants, and the mixtures thereof.

6. The composition according to one of the preceding claims, **characterized in that** the bulk density of the composition is in the range of 250 to 800 g/l, in particular 400 to 650 g/l, preferably 500 to 600 g/l; and/or
the sweetening power of the composition corresponds to 10 to 200 times, in particular 25 to 100 times, preferably 50 to 70 times of the sweetening power of saccharose;
and/or
the physiological calorific value of the composition (energy content) is in the range of 0.5 to 10 kcal/g, in particular in the range of 2 to 6 kcal/g, preferably in the range of 2.5 to 3.6 kcal/g.

7. The composition according to one of the preceding claims, **characterized in that** the form of the compactates, tablets, pills, or the like, in the longest average extension thereof has a measurement of 0.5 to 10 mm, in particular 1 to 8 mm, preferably 4 to 6 mm; and/or
the average weight of the individual compactates, tablets, pills, or the like each is between 10 and 200 mg, preferably 25 and 75 mg, in particular 40 and 60 mg; and/or the composition, based on the composition, has a total residual moisture of 0.5 to 8% by weight, in particular 1 to 5% by weight, preferably 2 to 4% by weight; and/or
the composition being present in the form of compactates, tablets, pills, or the like, preferably sweetener tablets, has a strength (tablet strength), in particular breaking strength, of at least 5 Newtons, in particular at least 6 Newtons, preferably in the range of 5 to 100 Newtons, particularly preferred 5 to 50 Newtons, most particularly preferred 6 to 30 Newtons.

8. A method for the production of a composition according to claims 1 to 7, wherein sucralose is combined together with at least one lubricant, and is then compacted, in particularly pressed, preferably into compactates, tablets, pills, or the like, preferably processed into sweetener tablets, wherein leucine is utilized as the lubricant, and wherein a weight ratio of the sweetener to the lubricant of between 5:1 and 1:5 is utilized.

9. The method according to claim 8, **characterized in that**
the total amount of sucralose utilized is divided into at least one first and one second part, wherein the first part of sucralose is initially combined and/or mixed with the lubricant, then optionally combined with at least one additional active ingredient and/or additive, subsequently is combined with the second, or remaining part of the sucralose, and is finally compacted, in particular pressed, while being formed; and/or
the compacting is carried out under pressure, in particular at a pressure in the range of 0.1 to 100 t/cm², in particular 1 to 50 t/cm², preferably 2 to 30 t/cm².

10. A use of a composition according to one of the claims 1 to 7 for sweetening foods, in particular beverages, or other liquid to paste-like foods, or solid foods.

## Revendications

1. Composition compactée, en particulier comprimée, présentant une valeur calorique (valeur énergétique) physiologique réduite, pour sucrer des produits alimentaires, en particulier sous forme de produits compactés, de comprimés, de pilules ou analogues, de préférence de comprimés édulcorants, la composition comprenant au moins un édulcorant, l'édulcorant étant le sucralose, **caractérisée en ce que**
la quantité de sucralose est de 5 à 15 % en poids par rapport à la composition ;
la composition contient en outre de la leucine en tant que lubrifiant, la quantité de leucine étant de 1 à 12 % en poids par rapport à la composition ; et
le rapport en poids de l'édulcorant au lubrifiant est compris entre 5:1 et 1:5.

2. Composition selon la revendication 1, **caractérisée en ce que** le rapport en poids de l'édulcorant au lubrifiant est compris entre 2:1 et 1:2.

3. Composition selon la revendication 1 ou 2, **caractérisée en ce que** la quantité de leucine est de 6 à 12 % en poids par rapport à la composition.

4. Composition selon l'une des revendications précédentes, **caractérisée en ce que** la composition contient, en tant que constituant supplémentaire, un ou plusieurs sucres et/ou alcools de sucre, le sucre étant en particulier choisi parmi les mono- ou les disaccharides, en particulier du groupe du saccharose, du mannose, du maltose, du dextrose, du lactose, du glucose, du xylose, de l'isomaltulose et des mélanges de ceux-ci, le lactose étant particulièrement préféré, et/ou en particulier la quantité du ou des sucres et/ou du ou des alcools de sucre, d'une manière particulièrement la quantité de lactose, étant de 20 à 90 % en poids, en particulier de 30 à 80 % en poids, de préférence de 40 à 70 % en poids, par rapport à la composition.

5. Composition selon l'une des revendications précédentes, **caractérisée en ce que**
la composition contient au moins un constituant supplémentaire et/ou un additif supplémentaire, en particulier au moins un agent régulateur de consistance et/ou un épaississant, en particulier le constituant supplémentaire et/ou l'additif supplémentaire étant au moins un polysaccharide ou un mélange de polysaccharides, choisi de préférence parmi les polysaccharides à liaison α-1,4/α-1,6-glycosidique, et de préférence choisi parmi l'amidon et les dérivés de l'amidon, en particulier l'amidon de maïs, la cellulose ou les dérivés de la cellulose, en particulier la carboxyméthylcellulose sodique, ainsi que les mélanges de ceux-ci, et/ou en particulier la quantité du constituant supplémentaire et/ou de l'additif supplémentaire, en particulier de l'agent régulateur de consistance et/ou de l'épaississant, étant de 1 à 30 % en poids, en particulier de 5 à 20, de préférence de 10 à 15 % en poids, par rapport à la composition ; et/ou
la composition comprend en outre des constituants et/ou adjuvants supplémentaires, choisis en particulier parmi les arômes ou les substances aromatiques, les acidifiants, les conservateurs, les colorants, les vitamines, les substances minérales, les stabilisants, les charges, les agents de compression, les désintégrants et les mélanges de ceux-ci.

6. Composition selon l'une des revendications précédentes, **caractérisée en ce que**
la masse volumique apparente de la composition est comprise dans la plage de 250 à 800 g/l, en particulier de 400 à 650 g/l, de préférence de 500 à 600 g/l ; et/ou
le pouvoir sucrant de la composition, rapporté au poids, correspond à 10 à 200 fois, en particulier à 25 à 100 fois, de préférence à 50 à 70 fois le pouvoir sucrant du saccharose ;
et/ou
la valeur calorique physiologique de la composition (valeur énergétique) est comprise dans la plage de 0,5 à 10 kcal/g, en particulier dans la plage de 2 à 6 kcal/g, de préférence dans la plage de 2,5 à 3,6 kcal/g.

7. Composition selon l'une des revendications précédentes, **caractérisée en ce que**
la forme des produits compactés, des comprimés, des pilules ou analogues, présente dans leur extension moyenne la plus longue une dimension de 0,5 à 10 mm, en particulier de 1 à 8 mm, de préférence de 4 à 6 mm ; et/ou
la masse moyenne de chacun des produits compactés, comprimés, pilules ou analogues individuels est comprise entre 10 et 200 mg, de préférence entre 25 et 75 mg, en particulier entre 40 à 60 mg ; et/ou
la composition présente, par rapport à la composition, une humidité résiduelle totale de 0,5 à 8 % en poids, en particulier de 1 à 5 % en poids, de préférence de 2 à 4 % en poids ; et/ou
la composition se présentant sous forme de produits compactés, de comprimés, de pilules ou analogues, de préférence de comprimés édulcorants, présente une résistance mécanique (résistance mécanique des comprimés), en particulier une résistance à la rupture, d'au moins 5 Newtons, en particulier d'au moins 6 Newtons, de préférence comprise dans la plage de 5 à 100 Newtons, d'une manière particulièrement préférée de 5 à 50 Newtons, d'une manière tout particulièrement préférée de 6 à 30 Newtons.

8. Procédé de fabrication d'une composition selon les revendications 1 à 7, dans lequel du sucralose est combiné à au moins un lubrifiant, puis est compacté, en particulier comprimé, de préférence transformé en des produits compactés, des comprimés, des pilules ou analogues, de préférence des comprimés édulcorants, dans lequel on utilise en tant que lubrifiant de la leucine, et dans lequel on utilise un rapport en poids de l'édulcorant au lubrifiant compris entre 5:1 et 1:5.

9. Procédé selon la revendication 8, **caractérisé en ce que**
la quantité totale utilisée de sucralose est subdivisée en au moins une première partie et une deuxième partie, la première partie du sucralose étant d'abord combinée et/ou mélangée au lubrifiant, puis éventuellement étant combinée à au moins un constituant et/ou additif supplémentaire, puis étant combinée à la deuxième partie, ou partie résiduelle, du sucralose, et étant finalement compactée par façonnage, en particulier comprimée ; et/ou
le compactage s'effectue sous pression, en particulier sous une pression comprise dans la plage de 0,1 à 100 t/cm², en particulier de 1 à 50 t/cm², de préférence de 2 à 30 t/cm².

10. Utilisation d'une composition selon l'une des revendications 1 à 7 pour sucrer des produits alimentaires, en particulier des poissons et d'autres produits alimentaires liquides à pâteux, ou de produits alimentaires solides.
